# EUROPÄISCHE PATENTANMELDUNG

(11) **EP 0 732 377 A2**
(43) Veröffentlichungstag der Anmeldung: **18.09.1996**
(21) Anmeldenummer: 96103720.7
(22) Anmeldetag: 09.03.1996
(51) Int. Cl.: C08L 101/00

(54) **Formmasse mit matter Oberfläche**

(30) Priorität: 13.03.1995 DE 19508934
(71) Anmelder: BASF AKTIENGESELLSCHAFT, 67056 Ludwigshafen (DE)
(72) Erfinder: McKee, Graham Edmund, Dr., 67433 Neustadt (DE); Rosenau, Bernhard, Dr., 67434 Neustadt (DE); Wendel, Kurt Dr., 67063 Ludwigshafen (DE)

(57) **Zusammenfassung**

Thermoplastische Formmassen, enthaltend
A) 60 bis 99 Gew.-% eines ersten thermoplastischen Polymerisats
B) 1 bis 40 Gew.-% eines von A) verschiedenen thermoplastischen Polymerisats aufgebaut aus Einheiten, die sich ableiten von
   b₁) 8 bis 80 Gew.-% mindestens eines Alkylacrylats mit 2 bis 20 C-Atomen im Alkylrest
   b₂) 8 bis 80 Gew.-% Acrylnitril oder Methacrylnitril oder deren Mischungen
   b₃) 0 bis 80 Gew.-% weiterer, mit b₁ und b₂ copolymerisierbarer Monomerer
C) 0 bis 40 Gew.-% faser- oder teilchenförmigen Füllstoffen oder deren Mischungen und
D) 0 bis 20 Gew.-% Zusatzstoffe und Verarbeitungshilfsmittel.

## Beschreibung

Die vorliegende Erfindung betrifft thermoplastische Formmassen, enthaltend
A) 60 bis 99 Gew.-% eines ersten thermoplastischen Polymerisats
B) 1 bis 40 Gew.-% eines von A) verschiedenen thermoplastischen Polymerisats aufgebaut aus Einheiten, die sich ableiten von
   b₁) 8 bis 80 Gew.-% mindestens eines Alkylacrylats mit 2 bis 20 C-Atomen im Alkylrest
   b₂) 8 bis 80 Gew.-% Acrylnitril oder Methacrylnitril oder deren Mischungen
   b₃) 0 bis 80 Gew.-% weiterer, mit b₁ und b₂ copolymerisierbarer Monomerer
C) 0 bis 40 Gew.-% faser- oder teilchenförmigen Füllstoffe oder deren Mischungen und
D) 0 bis 20 Gew.-% Zusatzstoffe und Verarbeitungshilfsmittel.

Polymere und Polymerlegierungen mit matter Oberfläche sind von wachsendem Interesse für Anwendungsbereiche, bei denen gleichzeitig hohe Zähigkeit und niedrige Lichtreflexionswerte (verminderte Blendung) gefordert werden, wie beispielsweise im Automobilinnenraum oder für optisch anspruchsvolle Gebrauchsgegenstände zur Vermeidung von Fingerabdrücken.

Eine Methode, matte Formkörper zu erhalten, ist die Verwendung grobteiliger Kautschuke (vgl. beispielsweise US 4 169 869) oder nur schwach vernetzter Kautschuke (vgl. beispielsweise DE-OS 2 057 936) als Pfropfgrundlage, welche anschließend in bekannter Weise gepfropft werden und den zu mattierenden Thermoplasten zugemischt werden.

Die Methode hat jedoch den Nachteil, daß gleichzeitig Zähigkeit, Härte und Verarbeitbarkeit verschlechtert werden.

Eine andere Methode der Mattierung ist das Abmischen der zu mattierenden Thermoplasten mit neutralen oder sauren Pfropfcopolymerisaten. Der Glanz dieser Einstellungen ist jedoch sehr von der Verarbeitung abhängig.

An sich ist auch bekannt, gleichzeitig sowohl saure als auch basische Monomere in einer matten Formmasse zu verwenden: DE 34 05 938 beschreibt Polymermischungen mit matter Oberfläche auf der Basis von Pfropfcopolymerisaten mit sauren Funktionen und Thermoplastharzen mit basischen Funktionen. DE 34 21 353 beschreibt die Verwendung saurer als auch gleichzeitig basischer Monomerer in der Pfropfhülle einer Kautschukkomponente, und die Verwendung dieser Pfropfkautschuke als Mattierungsmittel.

Pfropfkautschuke, welche saure Monomere im Grundkautschuk und basische Monomere in der Pfropfhülle enthalten und ihre Herstellung sind in EP 450 511 beschrieben. Dort wird erwähnt, daß solche Pfropfkautschuke in Abmischung mit spröden, d.h. nicht schlagzähmodifizierten Polymeren wie Polyvinylchlorid, Polymethylmethacrylat und Styrol/Acrylnitril-Copolymeren matte Oberflächen ergeben.

Aus der EP-A 576 960 ist bekannt, zur Mattierung von schlagzäh modifizierten Thermoplasten Pfropfkautschuke einzusetzen, die funktionelle Gruppen in der Pfropfgrundlage und in der Pfropfhülle enthalten. Auch diese Mischungen sind noch nicht in vollem Umfang zufriedenstellend.

Der vorliegenden Erfindung lag daher die Aufgabe zugrunde, thermoplastische Formmassen zur Verfügung zu stellen, die bei der Herstellung von Fertigteilen matte Oberflächen ergeben, ohne die sonstigen Eigenschaften wesentlich zu beeinträchtigen.

Diese Aufgabe wurde erfindungsgemäß durch thermoplastische Formmassen gemäß Anspruch 1 gelöst.

Bevorzugte Ausführungsformen sind den Unteransprüchen zu entnehmen.

Als Komponente A enthalten die erfindungsgemäßen Formmassen 60 bis 99, vorzugsweise 65 bis 98 und insbesondere 70 bis 95 Gew.-%, bezogen auf das Gesamtgewicht der Formmasse, eines Thermoplasten A. Bevorzugt werden als Thermoplaste A schlagzäh modifizierte Thermoplaste aus der Gruppe der ABS-Polymerisate, ASA-Polymerisate, schlagzähen Polystyrole, schlagzähen Polymethylmethacrylate, schlagzähen PVC-Produkte, Polycarbonate, Polyestercarbonate, Polyester, Polyamide, Polyphenylenether, Polyetherketone, Polyarylethersulfone, Polyoxyalkylene und Polyarylensulfide oder deren Mischungen, besonders bevorzugt ABS- und ASA-Polymerisate. Letztere bestehen im allgemeinen aus mindestens einem Pfropfcopolymerisat a₁) und mindestens einem Thermoplasten a₂₎, welcher im allgemeinen die Pfropfcopolymerisate dispergiert enthält.

Pfropfcopolymerisate a₁) werden im allgemeinen hergestellt durch Pfropfung von mindestens einem der im folgenden aufgeführten Monomeren auf mindestens eine der im folgenden aufgeführten Pfropfgrundlagen a₁₁).

Als Pfropfgrundlage a₁₁) (Kautschuk) können beispielsweise Naturkautschuk, Epichlorhydrin-Kautschuke, Ethylen-Vinylacetat-Kautschuke, Polyethylenchlorsulfonkautschuke, Silikonkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke und Fluorkautschuke eingesetzt werden. Bevorzugt werden Acrylatkautschuke, Butadienkautschuke, Ethylen-Propylen-Dien-Kautschuke, hydrierte Butadien- und Isoprenkautschuke oder Silikonkautschuke.

Acrylatkautschuke sind beispielsweise Alkylacrylat-Kautschuke auf der Basis von einem oder mehreren C₂-C₃₂-Alkylacrylaten, so insbesondere von Butyl-, Hexyl-, Octyl- und 2-Ethylhexylacrylat. Diese Alkylacrylatkautschuke können bis zu 40 Gew.-% Monomere wie Vinylacetat, (Meth)acrylnitril, Styrol, substituiertes Styrol, Methylmethacrylat, Vinylether copolymerisiert enthalten. Diese Acrylatkautschuke können weiterhin bis zu 10 Gew.-%, vorzugsweise 1 bis 5 Gew.-% bezogen auf die bei der Herstellung der Kautschukgrundlage eingesetzten Monomeren an vernetzend wirkenden, mindestens bifunktionellen Monomeren copolymerisiert enthalten. Beispiele sind Monomere, die zwei oder mehr radikalisch polymerisierbare Doppelbindungen enthalten, die nicht in 1,3-Stellung konjugiert sind. Geeignete Vernetzungsmonomere sind beispielsweise Divinylbenzol, Diallylmaleat, Diallylfumarat, Diallylphthalat, Triallylcyanurat, Triallylisocyanurat, Triallylphosphat, Allylmethacrylat. Als besonders günstiges Vernetzungs-Monomer hat sich der Acrylsäureester des Tricyclodecenylalkohols erwiesen (vgl. DE-PS 12 60 135).

Geeignete Acrylatkautschuke sind auch Produkte, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern und einer oder mehrerer weiterer Pfropfhüllen enthalten, wobei mindestens eine davon ein Acrylatkautschuk ist.

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z.B. Acrylnitril, Methacrylnitril, Acrylsäure, Methacrylsäure, Acrylsäurebutylester, Acrylsäureethylhexylester und Methylmethacrylat).

Besonders bevorzugte Dien-Kautschuke sind Butadien-, Butadien-Styrol-, Butadien-Methylmethacrylat-, Butadien-Acrylsäurebutylester- und Butadien-Acrylnitril-Kautschuke.

Geeignet als Pfropfgrundlage sind auch Silikonkautschuke, z.B. vernetzte Silikonkautschuke aus Einheiten der allgemeinen Formeln R₂SiO, RSiO_{3/2}, R₃SiO_{1/2} und SiO_{2/4}, wobei R einen einwertigen Rest darstellt. Die Menge der einzelnen Siloxaneinheiten sind dabei im allgemeinen so bemessen, daß auf 100 Einheiten der Formel R₂SiO 0 bis 10 Mol-Einheiten der Formel RSiO_{3/2}, 0 bis 1,5 Mol-Einheiten R₃SiO_{1/2} und 0 bis 3 Mol-Einheiten SiO_{2/4} vorhanden sind. R kann dabei entweder ein einwertiger gesättigter Kohlenwasserstoffrest mit 1 bis 18 C-Atomen, der Phenylrest oder der Alkoxy-Rest oder eine radikalisch angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Methyl.

Bevorzugte Silikonkautschuke enthalten eingebaute Einheiten radikalisch angreifbarer Gruppen, insbesondere Vinyl-, Allyl-, Halogen-, Mercaptogruppen, vorzugsweise in Mengen von 2 bis 10 Mol-%, bezogen auf alle Reste R.

Sie können beispielsweise nach den Angaben der EP-A-260 558 hergestellt werden.

Geeignete Monomere zur Bildung der Pfropfhülle a₁₂) sind im allgemeinen ausgewählt aus mindestens einer der nachstehenden Gruppen:

### a₁₂₁:

Styrol und seine substituierten Derivate, wie z.B. α-Methylstyrol, α-Chlorstyrol, p-Chlorstyrol, 2,4-Dichlorstyrol, p-Methylstyrol, 3,4-Dimethylstyrol, p-tert.-Butylstyrol, p-Methyl-α-Methylstyrol und p-Chlor-α-Methylstyrol, bevorzugt sind Styrol und α-Methylstyrol.

### a₁₂₂:

Acrylnitril, Methacrylnitril, Methylacrylat, Methylmethacrylat.

### a₁₂₃:

weitere Acryl- und Methacrylverbindungen, wie z.B. Acryl- und Methacrylsäure, Ethylacrylat, n- und Isopropylacrylat, n- und iso-Butylacrylat, tert.-Butylacrylat, 2-Ethylhexylacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Maleinsäurediester und Maleinimid, z.B. Alkyl- und Arylmaleinimide, wie beispielsweise Methyl- oder Phenylmaleinimid, bevorzugt Maleinsäureanhydrid und Phenylmaleinimid.

Bevorzugte Herstellverfahren für die Pfropfcopolymerisate a₁) sind die Emulsions-, Lösungs-, Masse- oder Suspensionspolymerisation, besonders bevorzugt die radikalische Emulsionspolymerisation. Insbesondere können die Pfropfcopolymerisate a₁) durch radikalische Emulsionspfropfpolymerisation der Monomeren der Pfropfhülle a₁₂) in Gegenwart von Kautschuklatices der Komponente a₁₁) bei Temperaturen von 20 bis 90°C unter Verwendung wasserlöslicher oder teilweise öllöslicher Initiatoren wie Peroxodisulfat, oder mit Hilfe von Redoxinitiatoren erzeugt werden. Im Falle von Redoxinitiatoren kann die Polymerisationstemperatur auch unterhalb von 20°C liegen.

Es können aber auch solche Kautschuke Verwendung finden, die bereits aus vorgebildeten Kern/Mantel-Kautschukteilchen bestehen. So kann beispielsweise der Kern aus einem Polybutadienkautschuk oder einem Siliconkautschuk, aber auch aus einem Styrol- oder Methylmethacrylat-Homo- oder -Copolymeren, wie z.B. Styrol/Acrylnitril bestehen. Der Mantel kann dann beispielsweise aus einem Acrylat bestehen (EP-A-260 558). Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (z.B. nach EP-A-230 282, DE-OS 36 01 419, EP-A-269 861).

ABS und ASA-Polymerisate bestehen im allgemeinen aus 5 bis 95, vorzugsweise 10 bis 60 Gew.-% aus dem Pfropfcopolymeren (Kautschuk) a₁) und zu 5 bis 95 Gew.-%, bevorzugt 40 bis 90 Gew.-% aus der Hartmatrix a₂).

Die Elastomeren a₁) enthalten 30 bis 95 Gew.-%, bevorzugt 40 bis 95 und besonders bevorzugt 50 bis 90 Gew.-% Pfropfgrundlage a₁₁) und 5 bis 70 Gew.-%, bevorzugt 5 bis 60, besonders bevorzugt 10 bis 50 Gew.-% pfropfcopolymerisierte Monomere a₁₂).

Die Monomeren a₁₂₁) werden im allgemeinen in einer Menge von 50 bis 100 Gew.-%, vorzugsweise 60 bis 95 Gew.-% und die Monomeren a₁₂₂) in einer Menge bis zu 50 Gew.-%, vorzugsweise von 5 bis 35 Gew.-% verwendet.

Der Anteil der Monomeren a₁₂₃) beträgt 0 bis 50, vorzugsweise 0 bis 30 Gew.-%, bezogen auf a₁₂).

Die Kautschuke liegen in diesen Polymerisaten a₁) im allgemeinen in Form vernetzter oder teilweise vernetzter Teilchen vor. Die mittlere Teilchengröße d(50) der Polymerisate a₁) liegt im allgemeinen zwischen 0,05 und 10 µm, vorzugsweise zwischen 0,08 und 1 µm.

Als erfindungsgemäße Komponente a₂) können Vinylpolymere und (Meth)acrylpolymere, als Homo- und Copolymerisate aus den unter a₁₂₁), a₁₂₂) und a₁₂₃) genannten Monomeren hergestellt werden. Beispiele für geeignete Homo- bzw. Copolymerisate sind Polystyrol, Polymethylmethacrylat, Styrol-Acrylnitril-Copolymere, α-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Methylmethacrylat/Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-tert.-Butylmethacrylat-Copolymere, Styrol-Acrylnitril-tert.-Butylmethacrylat-Copolymere.

Solche Copolymerisate entstehen häufig bei der Pfropfpolymerisation zur Herstellung des Pfropfcopolymeren a₁), besonders dann, wenn große Mengen Monomere a₁₂) auf kleine Mengen Kautschuk a₁₁) gepfropft werden. Die Vinylpolymere und (Meth)-Acrylpolymere können mittels bekannter radikalischer, anionischer und kationischer Polymerisationsverfahren hergestellt werden. Auch die bekannte Redoxpolymerisation oder die bekannte Polymerisation mit metallorganischen Mischkatalysatoren kann vorteilhaft sein.

Besonders bevorzugte ABS- oder ASA-Polymerisate als Komponente A) sind aufgebaut aus
a₁) 30 bis 95 Gew.-%, bezogen auf A), eines Pfropfkautschuks auf der Basis von
   a₁₁) 30 bis 95 Gew.-%, bezogen auf a₁), einer Pfropfgrundlage mit einer Glasübergangstemperatur von weniger als 0°C, erhalten aus
      a₁₁₁₎ 60 bis 100 Gew.-%, bezogen auf a₁₁), eines Alkylacrylats mit 2 bis 32 C-Atomen im Alkylrest und/oder eines konjugierten Diens
      a₁₁₂₎ 0 bis 10 Gew.-%, bezogen auf a₁₁), eines Monomeren mit mindestens zwei radikalisch polymerisierbaren Doppelbindungen
      a₁₁₃₎ 0 bis 40 Gew.-%, bezogen auf a₁₁), weiterer, mit a₁₁₁₎ copolymerisierbarer Monomerer
      mit der Maßgabe, daß der Anteil der Komponente a₁₁₂) 0,2 bis 10, vorzugsweise 1 bis 10 Gew.-%, bezogen auf a₁₁), beträgt, wenn in der Komponente a₁₁₁) kein konjugiertes Dien eingesetzt wird,
   a₁₂) 5 bis 70 Gew.-%, bezogen auf a₁), einer Pfropfauflage mit einer Glasübergangstemperatur von mehr als 20°C, erhalten aus
      a₁₂₁₎ 50 bis 100 Gew.-%, bezogen auf a₁₂), eines Styrols der allgemeinen Formel I 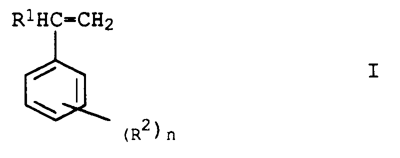 wobei R¹ und R² unabhängig voneinander Wasserstoff, Halogen oder eine C₁₋ bis C₈-Alkyl- oder Alkoxygruppe darstellen und n einen Wert von 0 bis 4 hat,
      a₁₂₂₎ 0 bis 50 Gew.-%, bezogen auf a₁₂), (Meth)acrylnitril und/oder Methyl(meth)acrylat oder deren Mischungen, und
      a₁₂₃₎ 0 bis 45 Gew.-%, bezogen auf a₁₂), weiterer mit a₁₂₁) und a₁₂₂) copolymerisierbarer Monomerer,
   und
a₂) 5 bis 95 Gew.-%, bezogen auf A), eines thermoplastischen Polymeren mit einer Glasübergangstemperatur von mindestens 20°C, erhalten aus
   a₂₁) 50 bis 100 Gew.-%, bezogen auf a₂), eines Styrols der allgemeinen Formel I
   a₂₂) 5 bis 50 Gew.-%, bezogen auf a₂), (Meth)acrylnitril, C₁-bis C₈-Alkyl(meth)acrylat, eines Maleinimids, Maleinsäureanhydrids oder deren Mischungen
   a₂₃) 0 bis 45 Gew.-%, bezogen auf a₂), weiterer mit a₂₁) und a₂₂) copolymerisierbarer Monomerer.

Als erfindungsgemäß zu mattierende Thermoplaste können auch die im folgenden beschriebenen amorphen und teilkristallinen Polymeren allein oder in Mischung mit den Komponenten a₁) und/oder a₂) eingesetzt werden. In einer bevorzugten Ausführungsform können Mischungen, aus einer oder mehrerer der nachstehenden Thermoplaste mit einer oder mehrerer unter a₁) und a₂) aufgeführten Komponenten als erfindungsgemäß zu mattierende Thermoplaste A eingesetzt werden.

In einer besonders bevorzugten Ausführungsform werden Mischungen aus 5 bis 95 Gew.-% Komponente (a₁ + a₂) und 5 bis 95 Gew.-% eines weiteren Thermoplasten als zu mattierende Polymere eingesetzt.

Geeignete weitere Thermoplaste A sind beispielsweise Abmischungen aus Polycarbonat mit den vorstehend beschriebenen Pfropfcopolymeren a₁) und Thermoplasten a₂). Solche Mischungen sind schon im Handel, beispielsweise unter der Handelsbezeichnung Bayblend® oder Terblend S® bekannt. Es handelt sich dabei um Abmischungen PC/ABS und PC/ASA. Bevorzugt liegt hierbei der Polycarbonat-Anteil zwischen 5 und 95 Gew.-% und der Anteil der Komponenten (a₁ + a₂) zwischen 5 und 95 Gew.-%.

Geeignete Polycarbonate sind beispielsweise solche auf Basis von Diphenolen der allgemeinen Formel (I)

HO-Ar-A-Ar-OH (I)

worin
- Ar =: Arylrest (Phenyl, Phenylalkyl, halogensubstituiertes Aryl),
- A =: Einfachbindung, C₁-C₃-Alkylen, C₂-C₃-Alkyliden-, C₃-C₆-Cycloalkylidengruppen sowie -S- oder -SO₂- bedeuten.

Bevorzugte Diphenole der allgemeinen Formel (I) sind beispielsweise Hydrochinon, Resorcin, 4,4'-Dihydroxybiphenyl, 2,2-Bis(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Die Diphenole der allgemeinen Formel (I) sind an sich bekannt oder nach bekannten Verfahren herstellbar.

Die Diphenole der allgemeinen Formel (I) können sowohl einzeln als auch im Gemisch zur Herstellung der Polycarbonate verwendet werden.

Die geeigneten Polycarbonate können in bekannter Weise verzweigt sein, und zwar vorzugsweise durch den Einbau von 0,05 bis 2,0 Mol-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die relative Viskositäten nᵣₑₗ von 1,10 bis 1,50, insbesondere von 1,25 bis 1,40, gemessen in 0,5 gew.-%iger Lösung in Dichlormethan bei 25°C, aufweisen. Dies entspricht mittleren Molekulargewichten M_{w} (Gewichtsmittel) von 10.000 bis 200.000, vorzugsweise von 20.000 bis 80.000.

Die Herstellung der Polycarbonate kann beispielsweise durch Umsetzung der Diphenole der allgemeinen Formel (I) mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 33 34 782).

Geeignete Kettenabbrecher sind beispielsweise Phenol, p-tert.-Butylphenol, aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Als Thermoplaste können auch Polycarbonat-Polysiloxan-Blockcopolymere, Polycarbonat-Polyether-Blockcopolymere und Polycarbonat-Polyester-Blockcopolymere dienen.

Erfindungsgemäß sind weiter als Thermoplaste Polyester, vorzugsweise aromatische Polyester und Polyestercarbonate einsetzbar. Sie bestehen aus mindestens einem aromatischen Bisphenol der allgemeinen Formel (I) aus mindestens einer aromatischen Dicarbonsäure und gegebenenfalls aus Kohlensäure bzw. deren Derivate, wie Phosgen, Dialkyl- und Diarylcarbonat. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5-dicarbonsäure.

Von den aromatischen Dicarbonsäuren werden besonders bevorzugt die Terephthalsäure und/oder Isophthalsäure eingesetzt. Für die Bisphenole gelten die unter der Formel (I) genannten Bevorzugungen.

Aromatische Polyester und Polyestercarbonate können nach Verfahren hergestellt werden, wie sie für die Polyester- und Polyestercarbonatherstellung aus der Literatur bekannt sind, so z.B. Verfahren in homogener Lösung, nach Schmelzumesterungsverfahren und nach dem Zweiphasengrenzflächenverfahren. Bevorzugt werden Schmelzumesterungsverfahren (Acetatverfahren und Phenylesterverfahren, beispielsweise beschrieben in US-P 3 494 885; 4 386 186; EP-A-26 120, 26 121, 26 684, 28 030, 39 854, 79 075, 91 602, 97 970, 146 887, 156 103, 234 913, 234 919, 240 301) und insbesondere das Zweiphasengrenzflächenverfahren (beispielsweise beschrieben in EP-A 68 014, 88 322, 134 898, 151 750, 182 189, 219 708, 272 426) angewandt.

Aliphatisch-aromatische Polyester sind beispielsweise amorphe Polyester aus Cyclohexan-1,4-dimethanol und Terephthalsäure und/oder Isophthalsäure, die als Comonomere noch andere Dicarbonsäuren und aliphatische Dihydroxyverbindungen einkondensiert enthalten können, z.B. Glykol, Propylenglykol und Butylenglykol. Beispiele für solche Polyester sind Cyclohexan-1,4-dimethanol-Terephthalsäure-Polyester, Cyclohexan-1,4-dimethanol-Terephthalsäure-Isophthalsäure-Copolyester und Cyclohexan-1,4-dimethanol-Terephthalsäure-Ethylenglykol-Copolyester. Solche Polyester werden beispielsweise beschrieben in EP-A 273 151, 273 152, 155 989, 226 974, 185 309, 152 825, 226 189, 272 416 und US-PS 4 188 314 und 4 634 737.

Als Thermoplaste können weiterhin teilkristalline aromatisch-aliphatische Polyester eingesetzt werden. Beispiele sind Polyalkylenterephthalate und Polyalkylennaphthalate, z.B. auf Basis von Ethylenglykol, Propandiol-1,3, Butandiol-1,4, Hexandiol-1,6 und 1,4-Bishydroxymethyl-cyclohexan. Besonders bevorzugt werden Polyethylenterephthalate, Polybutylenterephthalate, Polymethylennaphthalat und Copolymere aus Cyclohexan-1,4-di-methanol und Ethylenglykol sowie Terephthalsäure eingesetzt. Insbesondere wird Polybutylenterephthalat eingesetzt.

Die Molekulargewichte M_{w} (Gewichtsmittel) dieser Polyalkylenterephthalate liegen im allgemeinen zwischen 10.000 und 500.000, bevorzugt zwischen 10.000 und 80.000. Die Herstellung, z.B. durch Umesterung ist beschrieben beispielsweise in den US-PSen 2 647 885, 2 643 989, 2 534 028, 2 578 660, 2 742 494 und 2 901 466.

Weiterhin kommen als Thermoplaste amorphe Polyamide in Frage. Sie werden beispielsweise erhalten durch Polykondensation in Diaminen, wie Ethylendiamin, 2,2,4- und 2,4,4-Trimethylhexamethylendiamin, m- und p-Xylylendiamin, Bis-(4-aminocyclohexyl)-methan, Gemischen aus 4,4'- und 2,2'-Diaminodicyclohexylmethanen, 2,2-Bis-(4-aminocyclohexyl)-propan, 3,3'-Dimethyl-4,4'-diaminodicyclohexyl-propan, 3,3'-Dimethyl- 4,4'-diaminodicyclohexylmethan, 3-Aminoethyl-3,5,5-trimethyl-cyclohexylamin, 2,5-Bis-(aminomethyl)-norbornan, 2,6-Bis-(aminomethyl)-norbornan und 1,4-Diamino-methylcyclohexan, und von beliebigen Gemischen dieser Diamine mit Dicarbonsäuren, wie beispielsweise mit Oxalsäure, Malonsäure, Bernsteinsäure, Adipinsäure, Azelainsäure, Decandicarbonsäure, Dodecandicarbonsäure, Heptadecandicarbonsäure, 2,2,4-Trimethyladipinsäure, 2,4,4-Trimethyladipinsäure, Isophthalsäure und Terephthalsäure, und mit beliebigen Gemischen dieser Dicarbonsäuren. Es sind somit auch amorphe Copolyamide einbezogen, die durch Polykondensation mehrere der vorstehend genannten Diamine und/oder Dicarbonsäuren erhalten werden. Ferner sind amorphe Copolyamide einbezogen, die unter Mitverwendung von ω-Aminolaurinsäure und von deren Lactamen hergestellt sind.

Besonders geeignete, amorphe, thermoplastische Polyamide sind solche, die aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan erhältlich sind, solche die aus Isophthalsäure, 4,4'-Diamino-di-cyclohexylmethan und ω-Caprolactam erhältlich sind, solche, die aus Isophthalsäure, 3,3'-Dimethyl-4,4'-diamino-dicyclohexylmethan und ω-Laurinlactam erhältlich sind, und solche, die aus Terephthalsäure und 2,2,4- und/oder 2,4,4-Trimethylhexamethylendiamin erhältlich sind.

Anstelle des reinen 4,4'-Diaminodicyclohexylmethans können auch Gemische der stellungsisomeren Diaminodicyclohexylmethane eingesetzt werden.

Die amorphen Polyamide und ihre Herstellung sind bekannt (siehe beispielsweise Ullmann, Encyclopädie der technischen Chemie, Band 19, S. 50).

Geeignete Thermoplaste sind beispielsweise auch teilkristalline Polyamide, z.B. Polyamid-6 (Polycaprolactam), Polyamid-6,6 (Polyhexamethylenadipinsäureamid), Polyamid-4,6, Polyamid-6,12 und teilkristalline Copolyamide auf Basis dieser Komponenten. Weiterhin geeignet sind teilkristalline Polyamide, deren Säurekomponente ganz oder teilweise (z.B. neben ε-Caprolactam) aus Adipinsäure und/oder Terephthalsäure und/oder Isophthalsäure und/oder Korksäure und/oder Sebacinsäure und/oder Azelainsäure und/oder Dodecandicarbonsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht und deren Zusammensetzungen im Prinzip aus dem Stand der Technik bekannt sind (siehe beispielsweise Encyclopedia of Polymers, Vol. 11, S. 315 ff).

Außerdem sind teilkristalline Polyamide geeignet, die ganz oder teilweise aus Lactamen mit 6 bis 12 C-Atomen, ggf. unter Mitverwendung einer oder mehrerer oben genannter Diamine, hergestellt werden.

Besonders bevorzugte teilkristalline Polyamide sind Polyamid-6 und Polyamid-6,6 oder Copolyamide mit geringem Anteil, z.B. bis etwa 10 Gew.-%, an anderen Cokomponenten.

Weitere geeignete Thermoplaste sind aromatische Polyetherketone (beschrieben beispielsweise in den Patentschriften GB 1 078 234, US 4 010 147, EP 135 938, 292 211, 275 035, 280 998, 165 406 und in der Publikation von C.K. Sham et. al. Polymer 29/6, 1016-1020 (1988) beschrieben sind. Diese Polyetherketone können beispielsweise erhalten werden, indem man Bisphenole mit Bis-(halogenaryl)-ketonen in polaren aprotischen Lösungsmitteln in Gegenwart von Alkalicarbonaten, z.B. Lithiumcarbonat, umsetzt. Als Beispiel sei die Umsetzung von Hydrochinon mit 4,4'-Difluorbenzophenon genannt.

Ebenfalls geeignet als Thermoplaste A sind Polyethersulfone und Polysulfone.

Geeignet als Thermoplasten A sind ferner Polyoxyalkylene, wie z.B. das Polyoxymethylen. Ihre Herstellung ist dem Fachmann bekannt. Ganz allgemein weisen diese Polymerisate mindestens 50 Mol-% an wiederkehrenden Einheiten -CH₂O- in der Polymerhauptkette auf.

Die Homopolymeren werden im allgemeinen durch Polymerisation von Formaldehyd oder Trioxan in Gegenwart von geeigneten Katalysatoren hergestellt.

Im Rahmen der Erfindung werden Polyoxymethylen-(d.h. Trioxan)copolymere bevorzugt, insbesondere solche, die neben den wiederkehrenden Einheiten -CH₂O- noch bis zu 50, vorzugsweise 0,1 bis 20 und insbesondere 0,3 bis 10 Mol-% an wiederkehrenden Einheiten

-(O-C(R^{¹})(R²)-C(R⁴)(R⁵)ₙ)-

enthalten, wobei R¹ bis R⁴ unabhängig voneinander ein Wasserstoffatom, eine C₁-C₄-Alkylgruppe mit 1 bis 4 C-Atomen und R⁵ eine -CH₂-, -CH₂O-, eine C₁-C₄-Alkyl- oder C₁- bis C₄-Haloalkyl substituiertes Methylengruppe oder eine entsprechende Oxymethylengruppe darstellen und n einen Wert im Bereich von 0 bis 3 hat.

Die entsprechenden Comonomeren sind beispielsweise Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan.

Ebenfalls geeignet sind Oxymethylenterpolymerisate, die beispielsweise durch Umsetzung von Trioxan, einem der vorstehend beschriebenen cyclischen Ether und einem dritten Monomeren, vorzugsweise einer bifunktionellen Verbindung der Formel 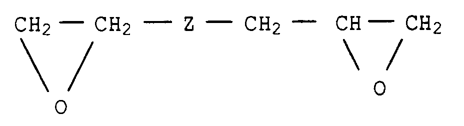
wobei Z eine chemische Bindung, -O-, -ORO- (R = C₁-C₈-Alkylen oder C₂-C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 Mol Glycidylverbindung und 1 Mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Die bevorzugten Polyoxymethylencopolymeren haben Schmelzpunkte von mindestens 150°C und Molekulargewichte (Gewichtsmittel) M_{w} im Bereich von 5000 bis 150.000, vorzugsweise von 7000 bis 100.000. Endgruppenstabilisierte Polyoxymethylenpolymerisate, die an den Kettenenden C-C-Bindungen aufweisen, werden besonders bevorzugt.

Schließlich sind als Thermoplaste A Polyarylensulfide, insbesondere das Polyphenylensulfid geeignet. Die Herstellung ist bekannt und beispielsweise beschrieben in US-PS 3 354 129, 3 786 035, 3 853 824, 3 856 560, 3 862 095 und EP-A-171 021.

Der Anteil der Komponente A) an den erfindungsgemäßen Formmassen liegt im Bereich von 60 bis 99, insbesondere 65 bis 97 und besonders bevorzugt 75 bis 95 Gew.-%, bezogen auf das Gesamtgewicht der Formmassen.

Als Komponente B) enthalten die erfindungsgemäßen thermoplastischen Formmassen 1 bis 40, vorzugsweise 3 bis 35 und insbesondere 5 bis 25 Gew.-%, bezogen auf das Gesamtgewicht der Formmassen, eines von A) verschiedenen thermoplastischen Polymerisats aufgebaut aus Einheiten, die sich ableiten von
b₁) 8 bis 80, vorzugsweise 10 bis 75 und insbesondere 10 bis 70 Gew.-% eines Alkylacrylats mit 2 bis 20 C-Atomen im Alkylrest,
b₂) 8 bis 80, vorzugsweise 10 bis 75 und insbesondere 10 bis 60 Gew.-% Acrylnitril oder Methacrylnitril oder deren Mischungen und
b₃) 0 bis 80, vorzugsweise 0 bis 75 und insbesondere 1 bis 75 Gew.-% weiterer, mit b₁) und b₂) copolymerisierbarer Monomerer.

Bevorzugte Alkylacrylate als Komponente b₁) sind solche mit 2 bis 12, besonders bevorzugt 2 bis 8 C-Atomen im Alkylrest, insbesondere Ethylacrylat, n- und i-Butylacrylat sowie Ethylhexylacrylat.

Als weitere Monomere b₃) kommen Monomere in Frage wie sie vorstehend für die Herstellung der Pfropfauflage a₂) als a₁₂₁), a₁₂₂) und a₁₂₃) beschrieben worden sind.

Besonders bevorzugt werden Copolymere aus n-Butylacrylat, Acrylnitril und Styrol sowie ggf. Acrylsäure oder Methacrylsäure in den vorstehend definierten Mengenverhältnissen. Die Herstellung solcher Polymerer B ist dem Fachmann bekannt und in der Literatur beschrieben, so daß sich hier nähere Angaben erübrigen.

Bevorzugt besitzt das Polymere B) keinen Schalenaufbau (d.h. es wird im allgemeinen nicht durch Emulsionspfropfcopolymerisation hergestellt) und weist einen geringen Gelgehalt von vorzugsweise unter 50, insbesondere unter 20 und ganz besonders unter 5 Gew.-% auf. Der Gelgehalt wird bestimmt, indem eine 1 %ige Lösung des Produktes in einem Lösungsmittel bei 23°C hergestellt wird. Die Lösung wird zentrifugiert, die Lösung durch Dekantierung von 1 cm Gel getrennt. Danach wird das Gel getrocknet, sein Gewicht bestimmt und der Gelanteil als Prozent der ursprünglichen Einwaage angerechnet. Die Wahl der Lösungsmittel hängt von der Zusammensetzung des Polymers ab. Dabei sollte ein für das unvernetzte Polymer gutes Lösungsmittel gewählt werden.

Als Komponente C) können die erfindungsgemäßen thermoplastischen Formmassen 0 bis 40, vorzugsweise bis zu 30 Gew.-%, bezogen auf das Gesamtgewicht der Formmasse, faser- oder teilchenförmige Füllstoffe oder deren Mischungen enthalten, wie sie in Thermoplasten allgemein eingesetzt werden und dem Fachmann bekannt sind.

Die erfindungsgemäßen thermoplastischen Formmassen können als weitere Bestandteile D) Zusatzstoffe enthalten, wie sie für thermoplastische Formmassen üblich sind. Als solche seien beispielsweise genannt Antistatika, Antioxidantien, Flammschutzmittel, Schmiermittel, Farbstoffe und Pigmente. Die Zusatzstoffe werden in üblichen Mengen, vorzugsweise in Mengen von bis zu 20 Gew.-%, bezogen auf das Gesamtgewicht der thermoplastischen Formmasse, eingesetzt.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit gefordert ist. Die erfindungsgemäßen Formmassen weisen gegenüber dem Stand der Technik eine deutlich mattere Oberfläche auf.

### Beispiele

### Komponente A:

### Pfropfmischpolymerisat a₁)

Das Pfropfmischpolymerisat wurde in Emulsion hergestellt und bestand aus einem Kern aus 60 Gew.-% n-Butylacrylat-Dihydrodicyclopentadienylacrylat-Copolymeren (DCPA) (98:2) gepfropft mit 40 Gew.-% Styrol-Acrylnitril (75:25). Die Teilchengröße war 0,4 µm und seine Verteilung eng. Die Polymerdispersion wurde mit Magnesiumsulfat ausgefällt und getrocknet.

### Komponente a₂)

Ein Monomerengemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-% und eine Viskositätszahl von 80 ml/g (0,5 %ig in Dimethylformamid bei 23°C nach DIN 53 726).

### Komponente B

### B1

Komponente wurde aus 2 Gew.-% Acrylsäure, 14 Gew.-% Styrol, 54 Gew.-% n-Butylacrylat und 30 Gew.-% Acrylnitril hergestellt. Die Herstellung erfolgte durch Dispersionspolymerisation in wäßriger Phase. Der Feststoffgehalt der Dispersion betrug 48 Gew.-%.

### B2

Die Komponente wurde aus 3 Gew.-% Acrylsäure, 60 Gew.-% Styrol, 14 Gew.-% n-Butylacrylat und 23 Gew.-% Acrylnitril hergestellt. Die Herstellung erfolgte wie bei B1. Der Feststoffgehalt betrug 35 %.

### B3

Die Zusammensetzung von B3 war 3 Gew.-% Acrylsäure, 70 Gew.-% Styrol, 13,5 Gew.-% Acrylnitril und 13,5 Gew.-% n-Butylacrylat. Die Herstellung erfolgte wie bei B1. Der Feststoffgehalt betrug 35 %.

### Herstellung der erfindungsgemäßen Formmassen

Zunächst wurde das Pfropfprodukt a₁) mit dem wie vorstehend beschrieben hergestellten Styrol/Acrylnitril-Copolymerisat a₂) in einem Extruder bei 250°C abgemischt. Das Mischungsverhältnis a₁:a₂ betrug dabei 1:1. Bei den Abmischungen mit dem Mattierungsmittel wurde das Mattierungsmittel in Form seiner Dispersion direkt in die Polymerschmelze im Extruder eingepumpt. Entlang des Extruders wurde das Wasser abgezogen. Die Abmischungen wurden aus dem Extruder in Form eines Stranges ausgepresst. Nach Kühlung wurde der Strang granuliert und zu 60 x 2 mm Rundscheiben und Kleinnormstäbchen bei 220 und 280°C gespritzt.

### d) Prüfung der Formmassen

Für die Glanzmessungen wurden die erfindungsgemäßen Formmassen auf einer Spritzgußmaschine der Fa. Arburg, Typ Allrounder bei einer Massentemperatur von 220 oder 280°C und einer Formtemperatur von 60°C zu 2 x 60 mm Rundscheiben gespritzt. Die Glanzmessungen wurden nach DIN 67530 mit einem Dr. Lange Reflektometer UME 1 unter einem Einstrahlwinkel von 45° durchgeführt.

Die Kerbschlagzähigkeit (kJ/m²) der Produkte wurde nach DIN 43453-k (Ausgabe 5/75) bei 23, 0 und -20°C gemessen. Die Spritztemperatur betrug 220 und 280°C und die Formtemperatur 60°C.

### Ergebnisse

| Nr. | % Komponente B | | Glanz bei KT¹⁾ | | AK²⁾ bei KT 220°C | | | AK bei KT 280°C | | |
|---|---|---|---|---|---|---|---|---|---|---|
| | | | 220 | 280°C | 23 | 0 | -20 | 23 | 0 | -20 |
| 1V | 0 | | 78 | 85 | 27 | 10 | 2,5 | 24 | 11 | 3,6 |
| 1 | 5 | B1 | 12 | 21 | 29 | 11 | 3,4 | 25 | 10 | 3,8 |
| 2 | 10 | B1 | 6 | 18 | 29 | 10 | 3,5 | 24 | 10 | 3,7 |
| 3 | 5 | B2 | 40 | n.g. | n.g. | n.g. | n.g. | n.g | n.g. | n.g. |
| 4 | 10 | B2 | 30 | n.g. | n.g. | n.g. | n.g. | n.g. | n.g. | n.g. |
| 5 | 10 | B3 | 40 | n.g. | n.g. | n.g. | n.g. | n.g. | n.g. | n.g. |

| | | | | | | | | | | |
|---|---|---|---|---|---|---|---|---|---|---|
| ¹⁾ KT: Kunststofftemperatur beim Spritzen | | | | | | | | | | |
| ²⁾ AK: Kerbschlagzähigkeit | | | | | | | | | | |
| n.g. = nicht gemessen | | | | | | | | | | |

## Patentansprüche

1. Thermoplastische Formmassen, enthaltend
A) 60 bis 99 Gew.-% eines ersten thermoplastischen Polymerisats
B) 1 bis 40 Gew.-% eines von A) verschiedenen thermoplastischen Polymerisats aufgebaut aus Einheiten, die sich ableiten von
b₁) 8 bis 80 Gew.-% mindestens eines Alkylacrylats mit 2 bis 20 C-Atomen im Alkylrest
b₂) 8 bis 80 Gew.-% Acrylnitril oder Methacrylnitril oder deren Mischungen
b₃) 0 bis 80 Gew.-% weiterer, mit b₁) und b₂) copolymerisierbarer Monomerer
C) 0 bis 40 Gew.-% faser- oder teilchenförmigen Füllstoffe oder deren Mischungen und
D) 0 bis 20 Gew.-% Zusatzstoffe und Verarbeitungshilfsmittel.

2. Thermoplastische Formmassen nach Anspruch 1, enthaltend als Komponente A einen schlagzäh modifizierten Thermoplasten aus der Gruppe der ABS-Polymerisate, ASA-Polymerisate, schlagzähen Polystyrole, schlagzähen Polymethylmethacrylate, schlagzähen PVC-Produkte, Polycarbonate, Polyestercarbonate, Polyester, Polyamide, Polyphenylenether, Polyetherketone, Polyarylethersulfone, Polyoxyalkylene und Polyarylensulfide.

3. Thermoplastische Formmassen nach Anspruch 1, enthaltend als Komponente A ein ABS oder ASA-Polymerisat.

4. Thermoplastische Formmassen nach Anspruch 3, enthaltend als Komponente A eine Mischung aus
a₁) 30 bis 95 Gew.-%, bezogen auf A₁), eines Pfropfkautschuks auf der Basis von
a₁₁) 30 bis 95 Gew.-%, bezogen auf a₁), einer Pfropfgrundlage mit einer Glasübergangstemperatur von weniger als 0°C, erhalten aus
a₁₁₁) 60 bis 100 Gew.-%, bezogen auf a₁₁), eines Alkylacrylats mit 2 bis 32 C-Atomen im Alkylrest und/oder eines konjugierten Diens
a₁₁₂₎ 0 bis 10 Gew.-%, bezogen auf a₁₁), eines Monomeren mit mindestens zwei radikalisch polymerisierbaren Doppelbindungen
a₁₁₃) 0 bis 40 Gew.-%, bezogen auf a₁₁), weiterer, mit a₁₁₁₎ copolymerisierbarer Monomerer,
mit der Maßgabe, daß der Anteil der Komponente a₁₁₂) 0,2 bis 10 Gew.-%, bezogen auf a₁₁), beträgt, wenn in der Komponente a₁₁₁) kein konjugiertes Dien eingesetzt wird,
a₁₂) 5 bis 70 Gew.-%, bezogen auf a₁), einer Pfropfauflage mit einer Glasübergangstemperatur von mehr als 20°C, erhalten aus
a₁₂₁) 50 bis 100 Gew.-%, bezogen auf a₁₂), eines Styrols der allgemeinen Formel I 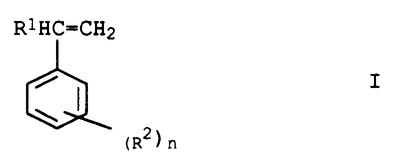 wobei R¹ und R² unabhängig voneinander Wasserstoff, Halogen oder eine C₁- bis C₈-Alkyl- oder Alkoxygruppe darstellen und n einen Wert von 0 bis 4 hat,
a₁₂₂₎ 0 bis 50 Gew.-%, bezogen auf a₁₂), (Meth)acrylnitril und/oder Methyl(meth)acrylat oder deren Mischungen, und
a₁₂₃) 0 bis 45 Gew.-%, bezogen auf a₁₂), weiterer mit a₁₂₁) und a₁₂₂) copolymerisierbarer Monomerer,
und
a₂) 5 bis 95 Gew.-%, bezogen auf A), eines thermoplastischen Polymeren mit einer Glasübergangstemperatur von mindestens 20°C, erhalten aus
a₂₁) 50 bis 100 Gew.-%, bezogen auf a₂), eines Styrols der allgemeinen Formel I
a₂₂) 0 bis 50 Gew.-%, bezogen auf a₂₎, (Meth)acrylnitril, C₁- bis C₈-Alkyl(meth)acrylat, eines Maleinimids, Maleinsäureanhydrids oder deren Mischungen
a₂₃) 0 bis 45 Gew.-%, bezogen auf a₂), weiterer mit a₂₁) und a₂₂) copolymerisierbarer Monomerer.
